# EUROPEAN PATENT SPECIFICATION

(11) **EP 3 562 090 B1**
(45) Date of publication and mention of the grant of the patent: **01.07.2020**
(21) Application number: 18169252.6
(22) Date of filing: 25.04.2018
(51) Int. Cl.: H04L 9/32, H04W 4/029

(54) **DATA PROCESSING DEVICE FOR PROCESSING A RADIO SIGNAL**
DATENVERARBEITUNGSVORRICHTUNG ZUR VERARBEITUNG EINES FUNKSIGNALS
DISPOSITIF DE TRAITEMENT DE DONNÉES POUR LE TRAITEMENT D'UN SIGNAL RADIO

(43) Date of publication of application: 30.10.2019
(73) Proprietor: Siemens Aktiengesellschaft, 80333 München (DE)
(72) Inventor: Falk, Rainer, 85586 Poing (DE)

(56) References cited:
- CN-A- 107 169 371
- US-A1- 2017 041 148
- US-B1- 9 131 462
- US-B1- 9 351 124
- Foamspace Corp: "FOAM Whitepaper", , 5 January 2018 (2018-01-05), pages 1-23, XP055514022, Retrieved from the Internet: URL:https://www.foam.space/publicAssets/FO AM_Whitepaper.pdf [retrieved on 2018-10-10]
- Christina Seifert: "FAIZOD. BLOCKCHAIN-GPS TRACKER", , 11 August 2017 (2017-08-11), pages 1-4, XP055514033, Retrieved from the Internet: URL:https://faizod.com/wp-content/download s/faizod.Blockchain-GPS-Tracker-en.pdf [retrieved on 2018-10-10]

## Description

### TECHNICAL FIELD

Various embodiments of the invention enable techniques for processing radio signals into transaction data, which may be transferred to a distributed database.

### BACKGROUND

Satellite navigation systems, such as the Global Positioning System (GPS), have already been established exhaustively in the present economic and private life. By way of example, these techniques have been used for tracking industrial products, piloting air transportation and preventing criminal acts.

However, preventing manipulation of such satellite navigation systems, commonly based on radio signaling comprising positional information of an object, is a major issue, since successfully completed manipulation means may obscure criminal activities, increase the occurrence of traffic accidents and degrade logistic efficiencies.

Therefore, there is a demand to improve the protection against manipulation of radio signals comprising positional information of an object.

Apart from this, documents US 8,531,247 B2, US 8,892,616 B2, US 8,300,811 B2, US 9,147,088 B2, US 9584311 B2, EP 2976707 B1, EP 2 605 445 B1, EP 2 870 565 A1, EP 2 891 102 A1, WO 2017137256 A1, EP 2870565 B1, EP 3028140 B1, EP 17175275, US 9 351 124 B1, US 2017/041148 A1 and US 8 843 761 B2 are known to a skilled person.

The cited documents US 9 351 124 B1 and US 2017/041148 A1 can be defined as closest prior art.

US 9 351 124 B1 teaches a method performed by a first connected sensor having accurate location data and includes detecting an identifying signal of a second sensor in proximity to the first sensor. The method includes electronically transmitting to the second sensor a set of one or more electronic transactions locally stored at the first sensor and electronically receiving from the identified second sensor a set of one or more electronic transactions locally stored at the second sensor, wherein at least one of the first and second sets of electronic transaction comprises transaction data with one or more objects of interests. The method includes merging the two sets of electronic transactions into an updated set of electronic transactions and transmitting the updated set of electronic transactions to a current state database, wherein the updated transactions may be accessed by a location server to determine the location of the one or more objects of interest. However, US 9 351 124 B1 is not directed to safety mechanisms which could avoid data manipulations.

US 2017/041148 A1 teaches a method for location verification with digital signatures. Specifically, it is disclosed that location data from a geolocation engine such as GPS is included in a digital record that is submitted to obtain a digital signature such that the presence of a device at a particular location can later be proven. The digital record may include data that encodes a message, as well as other parameters such as time. The digital signature encodes recomputation parameters of a hash tree signature infrastructure to a highest level value, a function of which is submitted as a transaction in a blockchain. Also, US 2017/041148 A1 is not directed to encrypting mechanisms which could avoid data manipulations.

CN 107 169 371 A describes a database operation method based on blockchain. By using a password, a transaction initiator carries out symmetric cryptography to a transaction. An asymmetric encryption is carried out to the password and a token is obtained. The token is also put into the transaction and the transaction is sent.

### SUMMARY

It is an object of the present disclosure to provide means for improving data protection against manipulation of radio signals comprising positional information of an object.

A data processing device and a method of processing a first radio signal according to the independent claims are provided. Further embodiments are defined in the dependent claims.

According to an embodiment, a data processing device is disclosed, which is adapted to process a first radio signal. The data processing device comprises a receiver unit, which is adapted to receive the first radio signal, wherein the first radio signal is indicative of a first set of positions of an object within a first time interval. The data processing device further comprises a transaction data generation unit, which is adapted to generate first transaction data based on the received first radio signal. The data processing device further comprises an output unit, which is adapted to transfer the first transaction data to the distributed database.

Such an approach is based on the finding that protection against manipulation of the first radio signal may be improved by converting these signals into a form, based on which the positional information of the object contained in the first radio signal may be distributed to a plurality of different means for data storage. In such a case, a potential manipulator would have to manipulate a plurality of different network nodes containing the respective storage means, which may be arranged globally. In doing so, protection against manipulation of the first radio signal may be improved. In addition, the adaption of the receiver unit to receive the radio signal, which is based on positions of the object within a certain time interval, enables saving of a high amount of object information by a preferably efficient processing procedure, which is based on an adaption for successively processing corresponding entities of radio signals.

According to another embodiment, a method of processing a first radio signal is disclosed. The method comprises receiving the first radio signal, wherein the first radio signal is indicative of a first set of positions of an object within a first time interval. The method further comprises generating transaction data based on the received first radio signal. The method further comprises transferring the transaction data to the distributed database.

Such an approach makes use of the advantages of the device outlined above.

A radio signal within the meaning of the present disclosure may refer to any data sequence provided in a manner, which is at least partly based on electromagnetic waves in a radio frequency range. The radio signal may be indicative of a set of positions of an object within a certain time interval. Different radio signals of the same object may be established at different time intervals. Such different radio signals may refer to the first radio signal and/or the second radio signal and/or the third radio signal disclosed herein. Each radio signal may further be configured as a radio snippet. Each radio signal may further be configured as a digital radio signal. At least one digital radio signal may be encoded as a time-discrete sequence of value-discrete signal values (e.g. 8 bit, 12 bit, 16 bit).

A time interval within the meaning of the present disclosure may refer to any window in time having a starting point and a final point. Within such a time interval, a plurality of events may occur at different points in time. Each of these events may be associated with the present position of an object. Different time intervals may be associated with the same object and may be different from each other. Such different time intervals may comprise the first time interval and/or the second time interval and/or the third time interval disclosed herein. At least one time interval may comprise a duration in the range of 1µs - 10ms and/or may be associated with a data volume in the range of 1kB - 100 kB. The duration of the respective time intervals may be identical or different. The time intervals may have an overlapping region or may have no overlapping region.

Transaction data within the meaning of the present disclosure may refer to any data amount, which may be handled commonly within any kind of transaction. Such a transaction may refer to a data transfer to a distributed database. Different transaction data may refer to different radio signals. As an example, first transaction data may correspond to a first radio signal, second transaction data may correspond to a second radio signal and third transaction data may correspond to a third radio signal. It may further be provided that each transaction data is based on one radio signals. It may further be provided that each transaction data is based on several radio signals. It may further be provided that each transaction data is based on the same amount of radio signals. The transaction may further correspond to a transaction within a Blockchain environment, in which the distributed database is a Blockchain based database. In a Blockchain environment, a transaction may refer to an operation for adding data to the Blockchain based database, wherein such a transaction is to be verified by any network node of the Blockchain based database. Such a Blockchain based database within the meaning of the present disclosure may also be denominated as a distributed ledger.

A distributed database within the meaning of the present disclosure may refer to an entity in which means for storing are distributed to different processing means and/or to different locations. Hereby, the distributed database may refer to a Blockchain based database and to a distributed ledger, respectively.

In an embodiment, the data processing device further comprises an encryption unit, which is adapted to encrypt the first transaction data and to provide a corresponding transaction data key, wherein the output unit is further adapted to transfer the transaction data key to the distributed database.

Thereby, the data processing device is adapted to further improve protection against manipulation, since it may provide first transaction data in an encrypted mode, which confuses the issue of manipulating the first transaction by a manipulator.

In the invention, the output unit is adapted to transfer the transaction data key to the distributed database after the corresponding encrypted first transaction data has been transferred to the distribution database.

Using these means, the data processing device may ensure that the decoded first transaction data transferred to the distributed data base may only be evaluated by a participant of the distributed database in a time-delayed manner. Thus, an information advantage of devices directly connected with the data processing device compared to devices receiving the respective transaction data via the distributed database may be achieved, which consequently results in a hierarchical network architecture.

In another embodiment, the data processing device further comprises a hash value generation unit, which is adapted to generate a hash value of the first transaction data comprising a reduced data size, wherein the output unit is further adapted to transfer the hash value to the distributed database. In another embodiment, the output unit is adapted to transfer the first transaction data to the distributed database after the corresponding hash value has been transferred to the distributed database.

Thereby, a unique fingerprint of the first transaction data comprising a reduced data volume may additionally be provided. Based on the reduced value of the hash value compared to the respective first transaction data, the hash value may be generated and transferred to the distributed database at an earlier point of time. Therefore, the hash value may preliminary be provided to the distributed databased as a substituent. As an example, such an approach may be used in order to disclose the distributed database community at an early point of time that the first radio signal has already been received by the data processing device, wherein the corresponding information of the first radio signal may be shared with the distributed database community at a later point in time or may use different data transmission means. Such an approach may result in an information advantage of devices directly connected with the data processing device compared to devices participating in the distributed database. According to another example, the hash values transferred to the distributed database may provide for preliminary protection against manipulation, since it uniquely indicates that the first radio signal has already been received by the data processing device. Although the distributed hash value does not comprise the entire information of the first radio signal, it may indicate, whether the first radio signal received by the data processing device has been erased by an manipulator.

In another embodiment of the device, the output unit is adapted to transfer the first transaction data to the distributed database using wireless mobile communication.

Thereby, the device enables a fast and efficient transfer of the first transaction data to the distributed database, even if the distributed database comprises far-flunged network nodes. In addition, such an adaption enables to transfer the first transaction data to different network nodes of the distributed database at the same time.

In another embodiment, the first transaction data comprise first information related to a serial number of the data processing device and/or PVT (position, velocity, time) information determined by the data processing device.

Thereby, additional information related to the specific processing device providing the first transaction data may be distributed to the distributed database. Thus, in case that the distributed database may determine irregularities with respect to any received first transaction data, these irregularities may be allocated to a specific data processing device, which may then reviewed, if such a data processing device is affected by any kind of manipulating means.

In another embodiment, the first transaction data comprise second information indicative of at least one further property of the object, wherein the at least one further property relates to temperature, pressure, brightness data, image information, video information, radar information and lidar information.

Thereby, the data processing device is adapted to supplement the generated first transaction data using additional information of the objected to be investigated. Thus, monitoring of the object under investigation may be improved.

In another embodiment, the distributed database is a Blockchain based database.

Since such a Blockchain based database provides for additional cryptographic means for securing data transactions in a respective Blockchain, such means further improve the protection of radio signals against manipulation.

In another embodiment, the first transaction data comprise a Smart Contract program code.

Since such a Smart Contract program code may comprise information regarding the admissibility of including such first transaction data in the distributed database, depositing of transaction data in the distributed database may be realized in a more controlled and user-determined manner.

In an embodiment, the data processing device is further adapted to process a second radio signal indicative of a second set of positions of the object within a second time interval, wherein the transaction data generation unit is further adapted to generate second transaction data based on the received second radio signal, and wherein the output unit is adapted to transfer the first transaction data and the second transaction data separately to the distributed database.

Thereby, the data processing device is adapted to provide the distributed database with time-resolved information of the object. Due to the adaption for successive processing of the first and second radio signal, the data processing device, which enables uploading of data to the distributed database, hereby provides for an efficient data handling.

In another embodiment, the first radio signal and the second radio signal comprise the same data volume size and/or the same time interval length.

Thereby, the efficiency of processing radio signals by the data processing device may be further improved.

In another embodiment, the data processing device is further adapted to process a second radio signal indicative of a second set of positions of the object within a second time interval, wherein the first time interval and the second time interval do not comprise an overlap region.

Using these means, it is prevented to include the same positional information of the object within the first radio signal and the second radio signal. Consequently, the data processing device is adapted to transfer the same amount of positional data of the object to the distributed database, while at the same time having less processing effort. Therefore, efficiency of the data processing device may be further improved.

In another embodiment, the data processing device is further adapted to process a third radio signal indicative of a third set of positions of the object within a third time interval, wherein the distance in between the starting point of the first time interval and the second time interval is equal to the distance in between the starting point of the second time interval and the third time interval.

Thereby, the time-resolved monitoring of the object under investigation may be performed in a preferably equable manner. In doing so, monitoring control of the object under investigation may be improved.

In another embodiment, the first radio signal is based on a satellite navigation service.

Thereby, the first radio signal comprises positional information of the object, which represents the effective performance of the object, such as the effective time-resolved location of the object, in a more precise manner.

In another embodiment, a transaction data receiving device is disclosed, which is adapted to be in communication with the data processing device according to the present disclosure, and which is adapted to receive the transaction data of the data processing device in case that the transaction data receiving device forms an integral part of the distributed database.

Thereby, a network node may be implemented by a participant of the distributed database, which may receive positional information of the object under investigation via the distributed database.

In an embodiment, the method is executed by a data processing device according to the present disclosure.

Thereby, the method can be executed according to the respective user demand.

A transaction data key within the meaning of the present disclosure may refer to any technical means, based on which transaction data may at least partly be encrypted. Such transaction data may refer to at least one of first transaction data, second transaction data and third transaction data.

A hash value within the meaning of the present disclosure may refer to any checksum characteristic for a certain data amount. Hereby, the certain data amount may comprise at least one of the first transaction data and the second transaction data. The hash value of each data amount may be unique. The hash value may be determined using any cryptographic means for encrypting. The hash value may also be determined using any cryptographic calculation means.

A Smart Contract program code within the meaning of the present disclosure may refer to any IT protocol, which is adapted to control a transfer of any transaction data to the distributed database. Hereby, the transaction data may comprise at least one of the first transaction data and the second transaction data.

A satellite navigation service within the meaning of the present disclosure may refer to any technical service, which is adapted to provide means for autonomous geo-spatial positioning based on satellite signaling. The satellite navigation service may refer to at least one of GPS, Galileo Open Service, Galileo Commercial Service, Galileo Public Regulated Service, Glonass and Beidou.

The above summary is merely intended to give a short overview over some features of some embodiments and implementations and is not to be construed as limiting. Other embodiments may comprise other features than the ones explained above. The invention is defined in the appended claims.

### BRIEF DESCRIPTION OF THE DRAWINGS

The above and other elements, features, steps and characteristics of the present disclosure will be more apparent from the following detailed description of embodiments with reference to the following figures:
- Figure 1: schematically illustrates an environment of a data processing device, which is adapted to process a first radio signal and a second radio signal, according to various examples.
- Figure 2: schematically illustrates another environment of a data processing device, which is adapted to process a first radio signal, according to various examples.
- Figure 3: schematically illustrates another environment of a data processing device, which is adapted to process a first radio signal, according to various examples.
- Figure 4: schematically illustrates a first transaction data according to various examples.
- Figure 5: schematically illustrates a diagram depicting a first radio signal, which can be extracted from a radio basic signal.
- Figure 6: schematically illustrates a diagram depicting different radio signals, which can be extracted from a radio basic signal.
- Figure 7: schematically illustrates a flowchart of a method of processing a first radio signal according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings, which are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

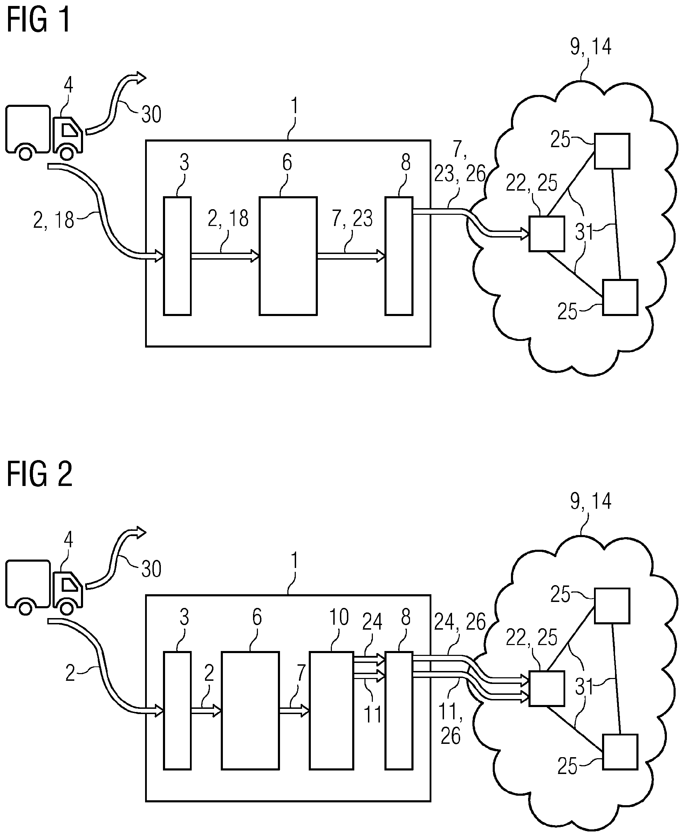

Figure 1 schematically illustrates an environment of a data processing device 1, which is adapted to process a first radio signal 2 and a second radio signal 18, according to various examples.

Hereby, the data processing device 1 may comprise a receiver unit 3, which is adapted to receive the first radio signal 2, wherein the first radio signal 2 is indicative of a first set of positions of an object 4 within a first time interval 5. As an example, the first set of position may refer to time-resolved positional data of the object 4 moving along the object trajectory 30. The first radio signal 2 may be further based on a satellite navigation service, such as GPS, Galileo Open Service, Galileo Commercial Service or Galileo Public Regulated Service.

The data processing device 1 may be further configured to deliver the received first radio signal 2 to a transaction data generation unit 6. The transaction data generation unit 6, which may be further comprised by the data processing device 1, may be adapted to generate first transaction data 7 based on the received first radio signal 2. The data processing device 1 may be further configured to deliver the generated first transaction data 7 to an output unit 8. The output unit 8, which may be further comprised by the processing device 1, may be adapted to transfer the first transaction data 7 to a distributed database 9. Hereby, the output unit 8 may be adapted to transfer the first transaction data 7 to the distributed database 9 using wireless mobile communication signal 26, such as a 5G wireless mobile communication. According to this, the distributed database 9 may be a Blockchain based database 14.

In addition, the data processing device 1 may be further adapted to process a second radio signal 18 in a successive or parallel manner. Hereby, the receiver unit 3 may be further adapted to receive the second radio signal 18, which is indicative of a second set of positions of the object 4 within a second time interval 19. The receiver unit 3 may receive the first radio signal 2 and the second radio signal 18 in a successive manner. According to an example, the second set of positions may refer to time-resolved positional data of the object 4 moving along the object trajectory 30. The object 4, moving along the object trajectory 30, may pass the second set of positions, after the first set of positions has already been passed.

The data processing device 1 may be further configured to deliver the received second radio signal 18 to the transaction data generation unit 6. The transaction data generation unit 6 may be further adapted to generate second transaction data based 23 on the received second radio signal 18. The data processing device 1 may be further configured to deliver the generated second transaction data 23 to an output unit 8. The output unit 8 may be further adapted to transfer the second transaction data 23 to the distributed database 9. Hereby, the output unit 8 may be adapted to transfer the second transaction data 23 to the distributed database 9 using a wireless mobile communication signal 26, such as a 5G wireless mobile communication. The output unit 8 may be adapted to transfer the first transaction data 7 and the second transaction data 23 separately to the distributed database 9.

The distributed database 9 may comprise a plurality of network nodes 25 connected with each other by connections 31. According to an example, a network node 25 may be configured as a transaction data receiving device 22, which may adapted to be in communication with the data processing device 1 using the wireless data communication signal 26. The transaction data receiving device 22 may be configured to receive the first transaction data 7 and/or the second transaction data 23 of the data processing device 1.

Figure 2 schematically illustrates another environment of a data processing device 1, which is adapted to process a first radio signal 2, according to various examples. For explanatory reasons, the data processing device 1 depicted in Figure 2 is adapted to merely process a single radio signal, namely the first radio signal 2. However, it is also taken into consideration that the data processing device 1 according to Figure 2 may be adapted to process a plurality of radio signals including the second radio signal 18 and the third radio signal 20.

The embodiment of the data processing device 1 according to Figure 2 may be based on the embodiment according to Figure 1 discussed above. Additionally, the data processing device 1 according to Figure 2 may comprise an encryption unit 10, which may be adapted to encrypt the first transaction data 7 and to provide a corresponding data key 11, wherein the output unit 8 may be further adapted to transfer the transaction data key 11 to the distributed database 9. Hereby, the output unit 8 may be adapted to transfer the transaction data key 11 to the distributed database 9, after the corresponding encrypted first transaction data 24 has been transferred to the distributed database 9. According to an example, the encrypted first transaction data 24 and/or the transaction data key 11 may be adapted to be transferred to the distributed database 9 using a wireless data communication signal 26.

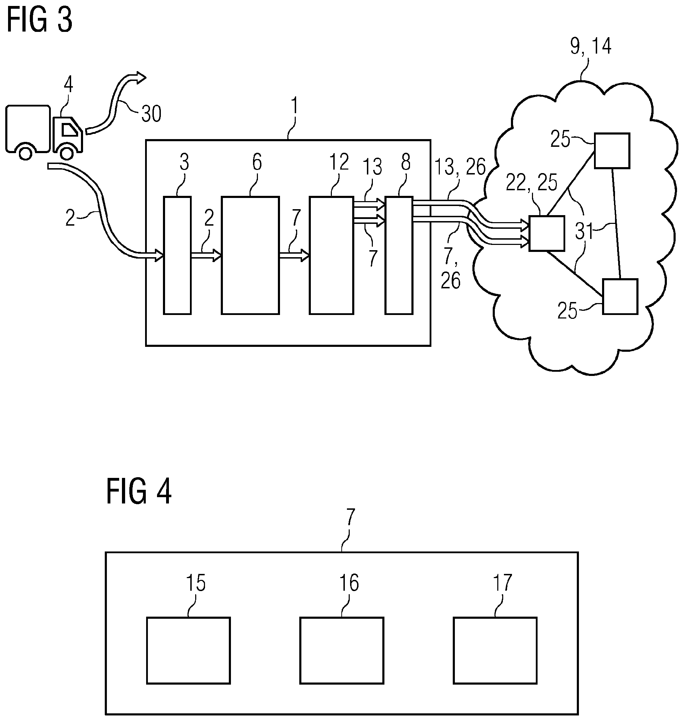

Figure 3 schematically illustrates another environment of a data processing device 1, which is adapted to process a first radio signal 2, according to various examples. For explanatory reasons, the data processing device 1 depicted in Figure 3 is adapted to process a single radio signal, namely the first radio signal 3. However, it is also taken into consideration that the data processing device 1 according to Figure 3 may be adapted to process a plurality of radio signals including the second radio signal 18 and the third radio signal 20. In addition, it is also taken into consideration to combine the features according to the embodiments of Figures 2 and 3.

The embodiment of the data processing device 1 according to Figure 3 may be based on the embodiment according to Figure 1 discussed above. Additionally, the data processing device 1 according to Figure 2 may comprise a hash value generation unit 12, which may be adapted to generate a hash value 13 of the first transaction data 7 comprising a reduced data size, wherein the output unit 8 is further adapted to transfer the hash value 13 to the distributed database 9. Hereby, the output unit 8 may be adapted to transfer the first transaction data 7 to the distributed database 9, after the corresponding hash value 13 has been transferred to the distributed database 9. According to an example, the hash value 13 and/or the corresponding first transaction data 7 may be adapted to be transferred to the distributed database 9 using a wireless data communication signal 26.

Figure 4 schematically illustrates a first transaction data 7 according to various examples. It is also taken into consideration that the second radio signal 18 and/or the third radio signal 20 may be configured in the same or in a different manner.

According to this, the first transaction data 7 may comprise first information 15 related to a serial number of the data processing device 1 and/or PVT information determined by the data processing device. Further, the first transaction data 7 may comprise second information 16 indicative of at least one further property of the object 4, wherein the at least one further property relate to temperature, pressure, brightness data, image information, video information, radar information and lidar information. In addition, the first transaction data 7 may comprise a Smart Contract program code 17.

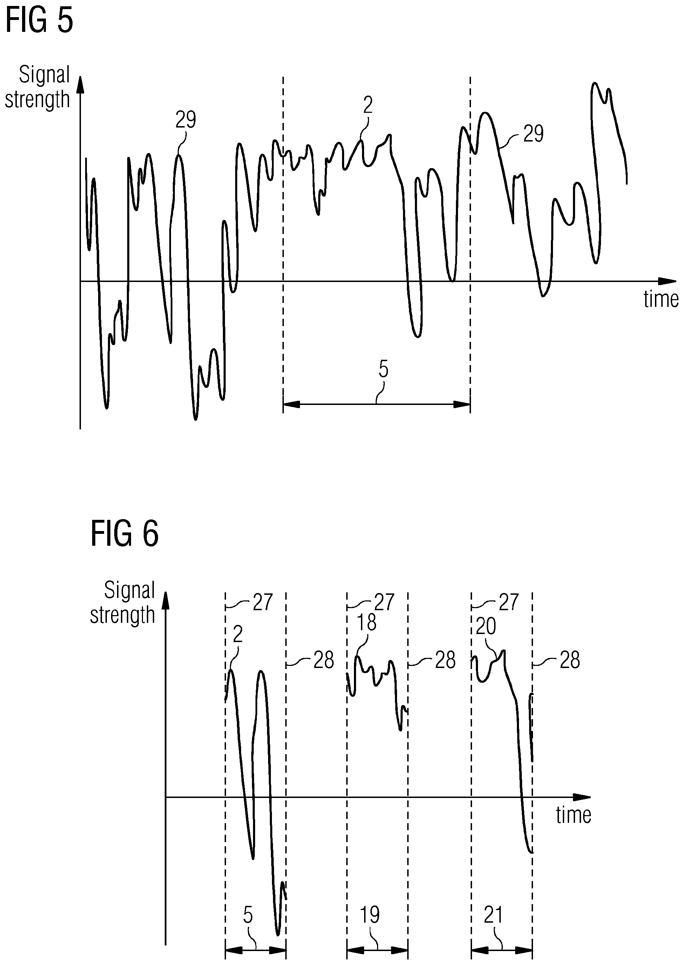

Figure 5 schematically illustrates a diagram depicting a first radio signal 2, which can be extracted from a radio basic signal 29. Hereby, the first radio signal 2 to be extracted from the radio basic signal 29 may correspond to a first time interval 5 and the time-resolved signal strength of the first radio signal 2 may correspond to a first set of positions of the object 4. According to an example, the signal strength of the first radio signal 2 at a certain point in time corresponds to the position of the object 4 at the same point in time.

Figure 6 schematically illustrates a diagram depicting different radio signals, which can be extracted from a radio basic signal 29. Specifically, the extractable radio signals according to Figure 6 refer to a first radio signal 2 corresponding to a first time interval 5, a second time interval 18 corresponding to a second time interval 19 and a third radio signal 20 corresponding to a third time interval 21. In addition, further radio signals corresponding time intervals are also taken into consideration. Hereby, each of the time intervals 5, 19, 21 comprises a starting point 27 and an end point 28.

According to this, the first radio signal 2 and/or the second radio signal 18 and/or the third radio signal 20 may comprise the same data volume size or a different data volume size. Further, the first radio signal 2 and/or the second radio signal 18 and/or the third radio signal 20 may comprise the same time interval length or a different time interval length. Further, the first time interval 5 of the first radio signal 2 and/or the second time interval 19 of the second radio signal 18 and/or the third time interval 21 of third radio signal 20 does not comprise an overlap region. However, it may also be taken into consideration that at least two of the time intervals 5, 19, 21 comprises an overlap region. In addition, the distance in between the starting point 27 of the first time interval 5 and the second time interval 19 may be equal to the distance in between the starting point 27 of the second time interval 19 and the third time interval 21. However, it may also be taken into consideration that the distance in between the starting point 27 of the first time interval 5 and the second time interval 19 is different from the distance in between the starting point 27 of the second time interval 19 and the third time interval 21.

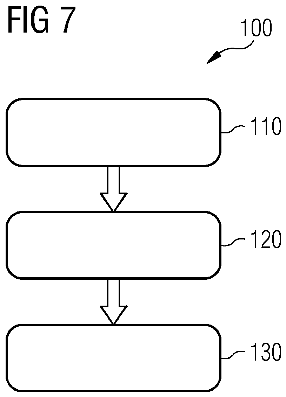

Figure 7 schematically illustrates a flowchart of a method 100 of processing a first radio signal 2 according to various examples.

At 110, the first radio signals 2 may be received, wherein the first radio signal 2 is indicative of a first set of positions of an object 4 within a first time interval 5.

At 120, the transaction data 7 may be generated based on the received first radio signal 2.

At 130, the transaction data 7 may be transferred to the distributed database 9.

According to various examples, the above-outlined method 100 may be executed by any of the above outlined configurations of the data processing device 1.

## Claims

1. Data processing device (1) adapted to process a first radio signal (2), comprising:
- a receiver unit (3) adapted to receive the first radio signal (2), wherein the first radio signal (2) is indicative of a first set of positions of an object (4) within a first time interval (5),
- a transaction data generation unit (6) adapted to generate first transaction data (7) based on the received first radio signal (2),
- an output unit (8) adapted to transfer the first transaction data (7) to a distributed database (9) and
- an encryption unit (10), which is adapted to encrypt the first transaction data (7) using a transaction data key and to provide the transaction data key (11), wherein the output unit (8) is further adapted to transfer the transaction data key (11) to the distributed database (9), wherein the output unit (8) is adapted to transfer the transaction data key (11) to the distributed database (9) after the corresponding encrypted first transaction data (24) has been transferred to the distribution database (9).

2. Data processing device (1) according to any one of the preceding claims, further comprising a hash value generation unit (12), which is adapted to generate a hash value (13) of the first transaction data (7) comprising a reduced data size, wherein the output unit (8) is further adapted to transfer the hash value (13) to the distributed database (9).

3. Data processing device (1) according to claim 2, wherein the output unit (8) is adapted to transfer the first transaction data (7) to the distributed database (9) after the corresponding hash value (13) has been transferred to the distributed database (9).

4. Data processing device (1) according to any one of the preceding claims, wherein the output unit (8) is adapted to transfer the first transaction data (7) to the distributed database (9) using wireless mobile communication.

5. Data processing device (1) according to any one of the preceding claims, wherein the first transaction data (7) comprise first information (15) related to a serial number of the data processing device (1) and/or PVT information determined by the data processing device (1).

6. Data processing device (1) according to any one of the preceding claims, wherein the first transaction data (7) comprise second information (16) indicative of at least one further property of the object (4), wherein the at least one further property relates to temperature, pressure, brightness data, image information, video information, radar information and lidar information.

7. Data processing device (1) according to any one of the preceding claims, wherein the distributed database (9) is a Blockchain based database (14).

8. Data processing device (1) according to claim 7, wherein the first transaction data (7) comprise a Smart Contract program code (17).

9. Data processing device (1) according to any one of the preceding claims, further adapted to process a second radio signal (18) indicative of a second set of positions of the object (4) within a second time interval (19), wherein the transaction data generation unit (6) is further adapted to generate second transaction data (23) based on the received second radio signal (18), and wherein the output unit (8) is adapted to transfer the first transaction data (7) and the second transaction data (23) separately to the distributed database (9).

10. Data processing device (1) according to claim 9,
wherein the first radio signal (2) and the second radio signal (18) comprise the same data volume size and/or the same time interval length.

11. Data processing device (1) according to claim 9 or claim 10, further adapted to process a second radio signal (18) indicative of a second set of positions of the object (4) within a second time interval (19), wherein the first time interval (5) and the second time interval (19) do not comprise an overlap region.

12. Data processing device (1) according to any one of claims 9 to 11, further adapted to process a third radio signal (20) indicative of a third set of positions of the object (4) within a third time interval (21), wherein the distance in between the starting point of the first time interval (5) and the second time interval (19) is equal to the distance in between the starting point of the second time interval (19) and the third time interval (21).

13. Data processing device (1) according to any one of the preceding claims, wherein the first radio signal (2) is based on a satellite navigation service.

14. Transaction data receiving device (22), which is adapted to be in communication with the data processing device (1) according to any one of the preceding claims, and which is adapted to receive an encrypted first transaction data (7) and a transaction data key of the data processing device (1) wherein the transaction data receiving device (22) forms an integral part of a distributed database (9), wherein the transaction data key is received from the data processing device (1) after the corresponding encrypted first transaction data (7) has been received from the data processing device (1).

15. A method (100) of processing a first radio signal (2),
the method comprising:
- receiving (110) the first radio signal (2), wherein the first radio signal (2) is indicative of a first set of positions of an object (4) within a first time interval (5),
- generating (120) first transaction data (7) based on the received first radio signal (2),
- encrypting the first transaction data (7) using a transaction data key,
- providing the transaction data key (11),
- transferring (130) the encrypted first transaction data (7) and the transaction data key (11) to a distributed database (9),
- wherein the transferring (130) comprises transferring the transaction data key (11) to the distributed database (9) after the corresponding encrypted first transaction data (24) has been transferred to the distribution database (9).

16. The method (100) according to claim 15, which is executed by a data processing device (1) according to any one of claims 1 to 13.

## Patentansprüche

1. Datenverarbeitungsvorrichtung (1), die zum Verarbeiten eines ersten Funksignals (2) ausgelegt ist und Folgendes umfasst:
- eine Empfängereinheit (3), die so ausgelegt ist, dass sie das erste Funksignal (2) empfängt, wobei das erste Funksignal (2) eine erste Menge von Positionen eines Objekts (4) innerhalb eines ersten Zeitraums (5) angibt,
- eine Transaktionsdatenerzeugungseinheit (6), die so ausgelegt ist, dass sie auf der Grundlage des empfangenen ersten Funksignals (2) erste Transaktionsdaten (7) erzeugt,
- eine Ausgabeeinheit (8), die so ausgelegt ist, dass sie die ersten Transaktionsdaten (7) an eine dezentrale Datenbank (9) übermittelt, und
- eine Verschlüsselungseinheit (10), die so ausgelegt ist, dass sie die ersten Transaktionsdaten (7) unter Verwendung eines Transaktionsdatenschlüssels verschlüsselt und den Transaktionsdatenschlüssel (11) zur Verfügung stellt,
wobei die Ausgabeeinheit (8) ferner so ausgelegt ist, dass sie den Transaktionsdatenschlüssel (11) an die dezentrale Datenbank (9) übermittelt, wobei die Ausgabeeinheit (8) so ausgelegt ist, dass sie den Transaktionsdatenschlüssel (11) an die dezentrale Datenbank (9) übermittelt, wenn die entsprechenden verschlüsselten ersten Transaktionsdaten (24) an die dezentrale Datenbank (9) übermittelt worden sind.

2. Datenverarbeitungsvorrichtung (1) nach einem der vorhergehenden Ansprüche, die ferner eine Hashwerterzeugungseinheit (12) umfasst, die so ausgelegt ist, dass sie einen Hashwert (13) für die ersten Transaktionsdaten (7) mit geringerer Datengröße erzeugt, wobei die Ausgabeeinheit (8) ferner so ausgelegt ist, dass sie den Hashwert (13) an die dezentrale Datenbank (9) übermittelt.

3. Datenverarbeitungsvorrichtung (1) nach Anspruch 2, wobei die Ausgabeeinheit (8) so ausgelegt ist, dass sie die ersten Transaktionsdaten (7) an die dezentrale Datenbank (9) übermittelt, wenn der entsprechende Hashwert (13) an die dezentrale Datenbank (9) übermittelt worden ist.

4. Datenverarbeitungsvorrichtung (1) nach einem der vorhergehenden Ansprüche, wobei die Ausgabeeinheit (8) so ausgelegt ist, dass sie die ersten Transaktionsdaten (7) unter Verwendung von Mobilfunkkommunikation an die dezentrale Datenbank (9) übermittelt.

5. Datenverarbeitungsvorrichtung (1) nach einem der vorhergehenden Ansprüche, wobei die ersten Transaktionsdaten (7) erste Informationen (15) umfassen, die eine Seriennummer der Datenverarbeitungsvorrichtung (1) und/oder von der Datenverarbeitungsvorrichtung (1) ermittelte PGZ-Informationen betreffen.

6. Datenverarbeitungsvorrichtung (1) nach einem der vorhergehenden Ansprüche, wobei die ersten Transaktionsdaten (7) zweite Informationen (16) umfassen, die mindestens eine weitere Eigenschaft des Objekts (4) angeben, wobei die mindestens eine weitere Eigenschaft Temperatur, Druck, Helligkeitsdaten, Bildinformationen, Videoinformationen, Radarinformationen und Lidarinformationen betrifft.

7. Datenverarbeitungsvorrichtung (1) nach einem der vorhergehenden Ansprüche, wobei es sich bei der dezentralen Datenbank (9) um eine auf Blockchain basierende Datenbank (14) handelt.

8. Datenverarbeitungsvorrichtung (1) nach Anspruch 7, wobei die ersten Transaktionsdaten (7) einen Smart-Contract-Programmcode (17) umfassen.

9. Datenverarbeitungsvorrichtung (1) nach einem der vorhergehenden Ansprüche, die ferner so ausgelegt ist, dass sie ein zweites Funksignal (18) verarbeitet, das eine zweite Menge von Positionen des Objekts (4) innerhalb eines zweiten Zeitraums (19) angibt, wobei die Transaktionsdatenerzeugungseinheit (6) ferner so ausgelegt ist, dass sie auf der Grundlage des empfangenen zweiten Funksignals (18) zweite Transaktionsdaten (23) erzeugt, und die Ausgabeeinheit (8) so ausgelegt ist, dass sie die ersten Transaktionsdaten (7) und die zweiten Transaktionsdaten (23) getrennt an die dezentrale Datenbank (9) übermittelt.

10. Datenverarbeitungsvorrichtung (1) nach Anspruch 9, wobei das erste Funksignal (2) und das zweite Funksignal (18) die gleiche Datenvolumengröße und/oder die gleiche Zeitraumlänge umfassen.

11. Datenverarbeitungsvorrichtung (1) nach Anspruch 9 oder 10, die ferner so ausgelegt ist, dass sie ein zweites Funksignal (18) verarbeitet, das eine zweite Menge von Positionen des Objekts (4) innerhalb eines zweiten Zeitraums (19) angibt, wobei der erste Zeitraum (5) und der zweite Zeitraum (19) keinen Überschneidungsbereich umfassen.

12. Datenverarbeitungsvorrichtung (1) nach einem der Ansprüche 9 bis 11, die ferner so ausgelegt ist, dass sie ein drittes Funksignal (20) verarbeitet, das eine dritte Menge von Positionen des Objekts (4) innerhalb eines dritten Zeitraums (21) angibt, wobei der Abstand zwischen dem Anfangspunkt des ersten Zeitraums (5) und des zweiten Zeitraums (19) dem Abstand zwischen dem Anfangspunkt des zweiten Zeitraums (19) und des dritten Zeitraums (21) entspricht.

13. Datenverarbeitungsvorrichtung (1) nach einem der vorhergehenden Ansprüche, wobei das erste Funksignal (2) auf einem Satellitennavigationsdienst basiert.

14. Transaktionsdatenempfangsvorrichtung (22), die so ausgelegt ist, dass sie mit der Datenverarbeitungsvorrichtung (1) nach einem der vorhergehenden Ansprüche Daten austauscht und verschlüsselte erste Transaktionsdaten (7) und einen Transaktionsdatenschlüssel der Datenverarbeitungsvorrichtung (1) empfängt, wobei die Transaktionsdatenempfangsvorrichtung (22) einen integralen Bestandteil einer dezentralen Datenbank (9) bildet, wobei der Transaktionsdatenschlüssel aus der Datenverarbeitungsvorrichtung (1) empfangen wird, wenn die entsprechenden verschlüsselten ersten Transaktionsdaten (7) aus der Datenverarbeitungsvorrichtung (1) empfangen worden sind.

15. Verfahren (100) zum Verarbeiten eines ersten Funksignals (2), wobei das Verfahren Folgendes umfasst:
- Empfangen (110) des ersten Funksignals (2), wobei das erste Funksignal (2) eine erste Menge von Positionen eines Objekts (4) in einem ersten Zeitraum (5) angibt,
- Erzeugen (120) erster Transaktionsdaten (7) auf der Grundlage des empfangenen ersten Funksignals (2),
- Verschlüsseln der ersten Transaktionsdaten (7) unter Verwendung eines Transaktionsdatenschlüssels,
- Zurverfügungstellen des Transaktionsdatenschlüssels (11),
- Übermitteln (130) der verschlüsselten ersten Transaktionsdaten (7) und des Transaktionsdatenschlüssels (11) an eine dezentrale Datenbank (9),
- wobei das Übermitteln (130) das Übermitteln des Transaktionsdatenschlüssels (11) an die dezentrale Datenbank (9) nach dem Übermitteln der entsprechenden verschlüsselten ersten Transaktionsdaten (24) an die dezentrale Datenbank (9) umfasst.

16. Verfahren (100) nach Anspruch 15, das von einer Datenverarbeitungsvorrichtung (1) nach einem der Ansprüche 1 bis 13 durchgeführt wird.

## Revendications

1. Dispositif de traitement de données (1) adapté pour traiter un premier signal radio (2), comprenant :
- une unité de récepteur (3) qui est adaptée pour recevoir le premier signal radio (2), dans lequel le premier signal radio (2) est indicatif d'un premier jeu de positions d'un objet (4) à l'intérieur d'un premier intervalle temporel (5) ;
- une unité de génération de données de transaction (6) qui est adaptée pour générer des premières données de transaction (7) sur la base du premier signal radio reçu (2) ;
- une unité de sortie (8) qui est adaptée pour transférer les premières données de transaction (7) à une base de données distribuée (9) ; et
- une unité de cryptage (10) qui est adaptée pour crypter les premières données de transaction (7) en utilisant une clé de données de transaction et pour fournir la clé de données de transaction (11) ;
dans lequel l'unité de sortie (8) est en outre adaptée pour transférer la clé de données de transaction (11) à la base de données distribuée (9), dans lequel l'unité de sortie (8) est adaptée pour transférer la clé de données de transaction (11) à la base de données distribuée (9) après que les premières données de transaction cryptées correspondantes (24) ont été transférées à la base de données distribuée (9).

2. Dispositif de traitement de données (1) selon l'une quelconque des revendications précédentes, comprenant en outre une unité de génération d'empreinte numérique (12) qui est adaptée pour générer une empreinte numérique (13) des premières données de transaction (7) présentant une dimension réduite en termes de données, dans lequel l'unité de sortie (8) est en outre adaptée pour transférer l'empreinte numérique (13) à la base de données distribuée (9).

3. Dispositif de traitement de données (1) selon la revendication 2, dans lequel l'unité de sortie (8) est adaptée pour transférer les premières données de transaction (7) à la base de données distribuée (9) après que l'empreinte numérique correspondante (13) a été transférée à la base de données distribuée (9).

4. Dispositif de traitement de données (1) selon l'une quelconque des revendications précédentes, dans lequel l'unité de sortie (8) est adaptée pour transférer les premières données de transaction (7) à la base de données distribuée (9) en utilisant une communication mobile sans fil.

5. Dispositif de traitement de données (1) selon l'une quelconque des revendications précédentes, dans lequel les premières données de transaction (7) comprennent une première information (15) qui concerne un numéro de série du dispositif de traitement de données (1) et/ou une information PVT qui est déterminée par le dispositif de traitement de données (1).

6. Dispositif de traitement de données (1) selon l'une quelconque des revendications précédentes, dans lequel les premières données de transaction (7) comprennent une seconde information (16) qui est indicative d'au moins une autre propriété de l'objet (4), dans lequel l'au moins une autre propriété concerne la température, la pression, des données de luminosité, une information d'image, une information vidéo, une information de radar et une information de lidar.

7. Dispositif de traitement de données (1) selon l'une quelconque des revendications précédentes, dans lequel la base de données distribuée (9) est une base de données basée sur chaîne de blocs (14).

8. Dispositif de traitement de données (1) selon la revendication 7, dans lequel les premières données de transaction (7) comprennent un code de programme de contrat intelligent (17).

9. Dispositif de traitement de données (1) selon l'une quelconque des revendications précédentes, en outre adapté pour traiter un deuxième signal radio (18) qui est indicatif d'un deuxième jeu de positions de l'objet (4) à l'intérieur d'un deuxième intervalle temporel (19), dans lequel l'unité de génération de données de transaction (6) est en outre adaptée pour générer des secondes données de transaction (23) sur la base du deuxième signal radio reçu (18), et dans lequel l'unité de sortie (8) est adaptée pour transférer séparément les premières données de transaction (7) et les secondes données de transaction (23) à la base de données distribuée (9) .

10. Dispositif de traitement de données (1) selon la revendication 9, dans lequel le premier signal radio (2) et le deuxième signal radio (18) présentent la même dimension en termes de volume de données et/ou la même longueur d'intervalle temporel.

11. Dispositif de traitement de données (1) selon la revendication 9 ou la revendication 10, en outre adapté pour traiter un deuxième signal radio (18) qui est indicatif d'un deuxième jeu de positions de l'objet (4) à l'intérieur d'un deuxième intervalle temporel (19), dans lequel le premier intervalle temporel (5) et le deuxième intervalle temporel (19) ne comprennent pas une région de chevauchement.

12. Dispositif de traitement de données (1) selon l'une quelconque des revendications 9 à 11, en outre adapté pour traiter un troisième signal radio (20) qui est indicatif d'un troisième jeu de positions de l'objet (4) à l'intérieur d'un troisième intervalle temporel (21), dans lequel la distance entre le point de début du premier intervalle temporel (5) et celui du deuxième intervalle temporel (19) est égale à la distance entre le point de début du deuxième intervalle temporel (19) et celui du troisième intervalle temporel (21).

13. Dispositif de traitement de données (1) selon l'une quelconque des revendications précédentes, dans lequel le premier signal radio (2) est basé sur un service de navigation par satellite(s).

14. Dispositif de réception de données de transaction (22), lequel est adapté pour être en communication avec le dispositif de traitement de données (1) selon l'une quelconque des revendications précédentes, et lequel est adapté pour recevoir des premières données de transaction cryptées (7) et une clé de données de transaction du dispositif de traitement de données (1), dans lequel le dispositif de réception de données de transaction (22) fait partie intégrante d'une base de données distribuée (9), dans lequel la clé de données de transaction est reçue depuis le dispositif de traitement de données (1) après que les premières données de transaction cryptées correspondantes (7) ont été reçues depuis le dispositif de traitement de données (1).

15. Procédé (100) de traitement d'un premier signal radio (2), le procédé comprenant :
- la réception (110) du premier signal radio (2), dans lequel le premier signal radio (2) est indicatif d'un premier jeu de positions d'un objet (4) à l'intérieur d'un premier intervalle temporel (5) ;
- la génération (120) de premières données de transaction (7) sur la base du premier signal radio reçu (2) ;
- le cryptage des premières données de transaction (7) en utilisant une clé de données de transaction ;
- la fourniture de la clé de données de transaction (11) ; et
- le transfert (130) des premières données de transaction cryptées (7) et de la clé de données de transaction (11) à une base de données distribuée (9) ;
dans lequel le transfert (130) comprend le transfert de la clé de données de transaction (11) à la base de données distribuée (9) après que les premières données de transaction cryptées correspondantes (24) ont été transférées à la base de données distribuée (9).

16. Procédé (100) selon la revendication 15, lequel est exécuté par un dispositif de traitement de données (1) selon l'une quelconque des revendications 1 à 13.
